# EUROPÄISCHE PATENTSCHRIFT

(11) **EP 1 214 915 B1**
(45) Veröffentlichungstag und Bekanntmachung des Hinweises auf die Patenterteilung: **12.09.2007**
(21) Anmeldenummer: 01129569.8
(22) Anmeldetag: 12.12.2001
(51) Int. Cl.: A61C 1/06, A61C 1/18

(54) **Zahnärztliches Instrument mit einem angetriebenen Werkzeug und einer Übertragungseinrichtung mit magnetischen Kupplungselementen**
Dental instrument with a driven tool and a transmission comprising some magnetic coupling parts
Instrument dentaire avec un outil mû via une transmission à couplage magnétique

(30) Priorität: 12.12.2000 DE 10061900
(43) Veröffentlichungstag der Anmeldung: 19.06.2002
(73) Patentinhaber: Sirona Dental Systems GmbH, 64625 Bensheim (DE)
(72) Erfinder: Bierbaum, Thomas, 64625 Bensheim (DE); Stein, Ulf, 64689 Grasellenbach (DE)
(74) Vertreter: Sommer, Peter

(56) Entgegenhaltungen:
- DE-A- 2 946 340
- DE-A- 3 237 197
- DE-A- 19 641 120
- GB-A- 887 143
- US-A- 4 278 907
- US-A- 4 486 176

## Beschreibung

### Technisches Gebiet

Die Erfindung betrifft ein zahnärztliches Instrument, im folgenden auch als Handstück bezeichnet, mit einem angetriebenen Werkzeug, wobei eine Übertragungseinrichtung mit mindestens einem magnetischen und/oder magnetisierbaren Kupplungselement vorgesehen ist. Derartige zahnärztliche Instrumente werden insbesondere zur Zahnbehandlung verwendet, wobei hier die bekannten zahnärztlichen Instrumente Motoren mit hohen Drehmomenten für eine gute Abtragsleistung aufweisen.

### Stand der Technik

Aus der DE 32 37 197 A1 ist ein Handstück mit integriertem Motor bekannt, der zum Antrieb von rotierenden Werkzeugen kleiner Abmessungen dient. Die Einrichtung zur Übertragung der Drehbewegung vom Motor zum Werkzeug besteht aus magnetischen Kupplungen als Ersatz für mechanische Getriebe zur Drehzahlerhöhung der üblicherweise bei etwa 667 1/s (40.000 Umdrehungen pro Minute) laufenden elektrischen Motoren. Der Einsatz von Elektromotoren hat gegenüber Turbinen den Vorteil, dass ein wesentlich höheres Drehmoment zum Werkzeug übertragen werden kann.

Aus der US 5,616,029 ist ein Handstück bekannt, welches eine in eine Drehrichtung wirksame Rutschkupplung aufweist, wobei darüber hinaus zur Drehzahlreduzierung ein Untersetzungsgetriebe vorgesehen ist.

Eine weitere Möglichkeit Antriebskräfte oder Momente zu beeinflussen besteht darin, Elektromotore elektronisch zu regeln. Die elektronische Momentbegrenzung von Elektromotoren ist von den mit Fertigungsstreuungen behafteten elektrischen Motordaten abhängig und somit ungenau. Nachgeschaltete Getriebestufen zur Drehzahlreduktion zeigen je nach Pflegezustand und Fertigungstoleranzen unterschiedliche Wirkungsgrade. Vorhandene Motormoment-Toleranzen und die Unterschiede der Getriebewirkungsgrade werden mit dem Untersetzungsverhältnis des nachgeschalteten Getriebes verstärkt und sind damit mit großen Toleranzen behaftet.

Die DE 29 46 240 offenbart eine magnetische Kupplungseinrichtung, die eine erste, antreibende Scheibe und eine zweite, angetriebene Scheibe umfasst, wobei die Scheiben jeweils eine Anzahl N- und S- Pole aufweisen, die abwechselnd entlang des Randes angeordnet sind. Die Achsen der antreibenden und der angetriebenen Scheibe bilden einen bestimmten Winkel miteinander, der eine Drehbewegung der antreibenden Scheibe durch die magnetische Kopplung an die angetriebene Scheibe ermöglicht.

Aus der GB 887,143 ist ein Getriebe mit variabler Umsetzung, welches über induzierte Wirbelströme eine Drehzahländerung zwischen einem Antrieb und einem Abtrieb bewirkt, bekannt.

### Darstellung der Erfindung

Gemäß der Erfindung wird ein Handstück mit einem angetriebenen Werkzeug vorgeschlagen, wobei eine Übertragungseinrichtung mit mindestens einem magnetischen und/oder magnetisierbaren Kupplungselement vorgesehen ist, bei welcher Mittel zur Beeinflussung des Übertragungsmomentes des magnetischen und/oder magnetsierbaren Kupplungselements vorgesehen sind.

Das Übertragungsmoment wird durch Veränderung des Rückschlusses auf der Antriebs- und/oder Abtriebsseite durch Abschwächung des Magnetfeldes zwischen den Kupplungselementen beeinflusst.

Hierdurch ist eine Anpassung an Spezialanwendungen mit besonderen Anforderungen an Bewegungsart und Drehmoment möglich, was am Beispiel der Wurzelkanalbehandlung (Endodontie) beschrieben wird.

Hier werden lange, dünne Werkzeuge zum Entfernen von entzündeten Nerven verwendet. Bislang ist eine manuelle Bearbeitung üblich, um mit Fingerspitzengefühl das Abbrechen der extrem dünnen Werkzeuge zu verhindern. Darüber hinaus ist die manuelle Aufbereitung sehr zeitaufwändig. Durch die sehr unterschiedlichen natürlichen Formen im Wurzelkanal müssen unterschiedlichste Werkzeuge für jeden einzelnen Kanal verwendet werden, wobei der Unterschied in der Länge, der Konizität, dem Durchmesser, der Flexibilität und Festigkeit liegt. Hierbei treten extreme Werkzeugbeanspruchungen auf, insbesondere in bezug auf Torsion und Biegung bei gekrümmten Wurzelkanälen. Wegen der speziellen Schneidengeometrie solcher rotierenden Werkzeuge sind in der Regel niedrige Drehzahlen von 5 bis 25 1/s (300 -2.100 Umdrehungen pro Minute) erforderlich, wobei die hohe Drehzahl der Antriebsmotoren in einem Untersetzungsgetriebe reduziert und unerwünschter Weise somit das Drehmoment am Werkzeug erhöht wird. Da oftmals bereits das Drehmoment der verwendeten Motoren viel zu hoch ist besteht die Gefahr, die dünnen, hochbeanspruchten Werkzeuge abzubrechen, da mit den mechanischen Systemen kein Fingerspitzengefühl erfasst werden kann. Die abgebrochenen Werkzeuge können nicht im Zahn belassen werden und müssen entfernt werden, was in der Regel sehr zeitaufwändig ist und oftmals sogar einen Zahnverlust bedeutet.

Dank der Erfindung können motorisch angetriebene Handstücke verwendet werden, um Zeit einzusparen. Hierbei können sowohl Hin- und Herbewegungen, Auf- und Abbewegungen oder Kombinationen davon über spezielle Getriebe bereitgestellt werden, wobei jedoch von besonderem Interesse vollrotierende Werkzeuge sind.

Beim Überschreiten eines bestimmten Drehmoments kuppeln die magnetischen Kupplungselemente aus, wodurch der Werkzeugbruch verhindert werden kann. Dabei ist das Drehmoment durch entsprechende Vorrichtungen einstellbar und kann somit auf die verschiedenen Werkzeugtypen angepasst werden. Die Verwendung von magnetischen Kupplungselementen hat den Vorteil, dass kein Verschleiß auftritt, da keine Berührung stattfindet. Ein Toleranzausgleich ist einfach und Fluchtungsfehler, wie beispielsweise Achsversatz, oder Winkelfehler, Abstandsfehler oder Rundlauffehler, hier insbesondere Exzentrizität, haben auf die Funktion keinen wesentlichen nachteiligen Einfluss. Darüber hinaus sind die Kupplungselemente elektrisch voneinander isoliert und akustisch getrennt, so dass keine Übertragung von Körperschall erfolgen kann.

Zur Beeinflussung des Übertragungsmoments wird ein weichmagnetisches Bauteil, z.B. ein Joch oder Rückschluß oder ein Magnet im Einflussbereich einer oder beider magnetischer Kupplungselemente positioniert, so dass das Magnetfeld zumindest eines der Magnete des Kupplungselements auch durch dieses Bauteil gelenkt wird. Hierdurch schwächt sich die zwischen den Kupplungselementen wirkende magnetische Kraft ab.

Alternativ kann der Rückschluß auf der Antriebs- und/oder Abtriebsseite durch einen oder mehrere Elektromagneten erfolgen, die elektronisch veränderbar sind. Die Veränderung kann über Signale aus Sensoren erfolgen oder durch externe Größen vorgegeben sein, z.B. Druck, Temperatur, Helligkeit, Geschwindigkeit, Drehmoment, Zeit.

Die magnetischen Kupplungsmittel können als Permanentmagnete oder als Elektromagnete ausgeführt werden und das Drehmoment bzw. die Kraft weitergeben oder indirekt mit stationären Magneten zusammenwirken.

Insgesamt ergibt sich aufgrund der magnetischen Kupplungselemente eine drehzahlunabhängige Drehmomentbegrenzung, die berührungslos ausgeführt ist und daher keinem Verschleiß unterliegt und darüber hinaus weitgehend temperaturunabhängig ist.

Es ist möglich, eine Momentbegrenzung in einem gezielten Winkel- oder Längenbereich herbeizuführen, in dem das den Magneten beeinflussende Bauteil nur in einem Bereich bzw. einem Segment des Umfangs angeordnet wird. Dabei kann es feststehend oder mitdrehend sein.

Weiterhin können im Handstück mehrere Achsen im An-und/oder Abtrieb und mehrere Kupplungsstellen vorgesehen sein.

Schließlich kann das weichmagnetische Bauteil mit Schaltmitteln zusammenwirken, um andere Funktionen zu beeinflussen oder auszulösen. Dabei wird die auf das das Magnetfeld beeinflussende Bauteil einwirkende Kraft ausgenutzt, indem das Bauteil von dem oder den Magneten des magnetischen Kupplungselements angezogen wird. Ist eine koaxiale Anordnung der Schaltmittel vorgesehen, so kann es sich um eine Zentrierkraft handeln.

In vorteilhafter Weise werden die magnetischen Kupplungselemente so ausgewählt, dass nach dem Auskuppeln der magnetischen Kupplungselemente eine entgegen der ursprünglichen Arbeitsrichtung gerichteten Kraft erzeugt wird, mittels welcher das Werkzeug in entgegen gesetzter Richtung bewegbar ist, um so ein Losrütteln eines festgefressenen Werkzeugs zu begünstigen.

Das zahnärztliche Instrument kann weiterhin einen Antriebsmotor mit hoher Drehzahl und ein Untersetzungsgetriebe zur Verringerung der Drehzahlen in einem Bereich von 5 bis 25 Umdrehungen/Sekunde aufweisen, so dass vorhandene Antriebsmotoren durch Aufstecken des erfindungsgemäßen Handstücks weiter verwendet werden können. Auf den Antriebsmotor lassen sich über eine Anschlußstelle, welche der Anschlußstelle eines mit hoher Drehzahl betriebenen Werkzeugs entspricht, weitere Handstücke befestigen.

Vorteilhafterweise ist die Übertragungseinrichtung mit dem magnetischen Kupplungselement derart ausgebildet, dass der Grenzwert des Werkzeugs bezüglich Torsion und Biegung stets unterschritten wird. Hierdurch wird ein Bruch des Werkzeugs vermieden.

Besonders geeignet ist das zahnärztliche Instrument zur Verwendung mit einem Werkzeug zur Wurzelkanalbehandlung, da hier geringe Drehmomente übertragen werden sollen.

Vorteilhafterweise ist das magnetische Kupplungselement so angeordnet, dass sowohl antriebsseitig als auch abtriebsseitig Drehbewegungen übertragen werden. Es ist jedoch auch möglich, die magnetischen Kupplungselemente so anzuordnen, dass ein Teil der Kupplung eine Drehbewegung und der andere Teil der Kupplung eine Translationsbewegung ausführt oder dass beide magnetischen Kupplungselemente Translationsbewegungen ausführen.

Das gewünschte Drehmoment ist um so genauer reproduzierbar und einstellbar, je näher am Werkzeug die Beeinflussung vorgenommen wird.

### Kurzbeschreibung der Zeichnung

In der Zeichnung sind verschiedene Ausführungsbeispiele der Erfindung dargestellt. Es zeigt die:
- Fig. 1a: einen Halstrieb eines zahnärztlichen Handstücks im Längsschnitt;
- Fig. 1b: den Halstrieb gemäß Fig. 1a mit einer Schaltfunktion;
- Fig. 2: ein weiterer Halstrieb mit einer anderen magnetischen Kupplung;
- Fig. 3: ein Antriebsteil eines zahnärztlichen Winkelstücks mit einer Magnetkupplung;
- Fig. 4a,b: das Wirkprinzip einer in Fig. 2 dargestellten magnetischen Kupplung;
- Fig. 5a,b,c: die Wirkungsweise der in Fig. 1 dargestellten Kupplungsanordnung;
- Fig. 6: den Momentenverlauf in Abhängigkeit des relativen Verdrehwinkels zwischen den magnetischen Kupplungsteilen;
- Fig. 7a,b,c: magnetische Kupplungselemente mit in radialer Richtung magnetisierten Magneten;
- Fig. 8a,b: eine magnetische Kupplung mit nur einem magnetischen Kupplungselement;
- Fig. 8c,d,e: magnetische Kupplungen mit magnetisierbaren Kupplungselementen und einem stationären Magnet;
- Fig. 9a,b: eine magnetische Kupplung mit einem drehenden Kupplungselement und einem in Translationsrichtung bewegbaren Kupplungs-element;
- Fig. 10a,b: eine magnetische Kupplung mit einem drehenden Antrieb und einem drehbaren und verschiebbaren Abtrieb;
- Fig. 11a,b,c: eine magnetische Kupplung zur Umsetzung einer Drehbewegung in eine Translationsbewegung;
- Fig. 12: eine magnetische Kupplung mit einer Translationsbewegung, welche ein mehrfaches der Abmessung des Antriebs
- Fig. 13: entspricht: eine magnetische Kupplung mit in Translationsrichtung bewegbaren Kupplungselementen;
- Fig. 14a,b: eine Prinzipskizze einer Momentbegrenzung in einem gezielten Winkelbereich. Ausführungsbeispiel der Erfindung

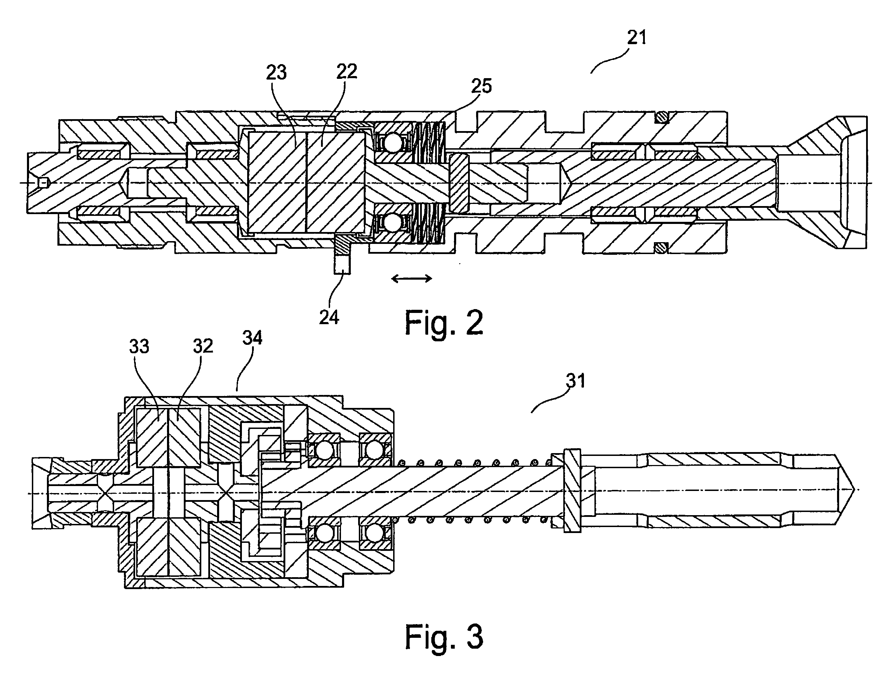

Die Fig. 2, 3, 4a und 4b dienen zur Verdeutlichung des erfinderischen Prinzips.

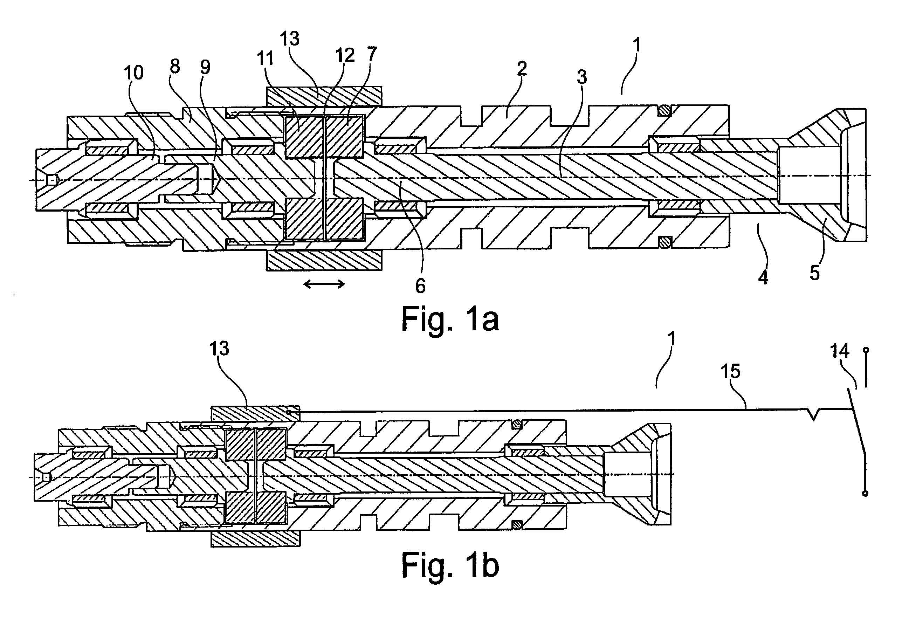

In Fig. 1a ist der Halstrieb 1 eines zahnärztlichen Handstücks im Längsschnitt dargestellt. Der Halstrieb 1 umfaßt einen Schaft 2, in welchem eine Antriebswelle 3 geführt ist, die an ihrem einen Ende 4 ein Zahnrad 5 aufweist und welche an dem anderen Ende 6 ein erstes magnetisches Kupplungsteil 7 aufweist.

An den Schaft 2 ist ein zweiter Schaft 8 befestigt, in dem eine weitere Welle 9 mit einem zusätzlichen Wellenstück 10 untergebracht ist. Die Welle 9 trägt dabei ein zweites magnetisches Kupplungsteil 11, welches mit dem ersten magnetischen Kupplungsteil 7 in Wechselwirkung steht. Zwischen den beiden Kupplungsteilen 7, 11 befindet sich ein Luftspalt 12, so dass die Kupplungsteile 7, 11 einander nicht berühren. Darüber hinaus sind die Kupplungsteile 7, 11 im Schaft 2 bzw. im Schafteil 8 drehbar gelagert.

Zur Veränderung des Rückschlusses zwischen den magnetischen Kupplungsteilen 7, 11 ist eine magnetische oder magnetisierbare Hülse 13 im Bereich der Kupplungsteile 7, 11 in Längsrichtung entlang des Schaftes 2 verschiebbar angeordnet. In der gezeigten Lage der Hülse 13 zu den Kupplungsteilen 7, 11 ist die Abschwächung des Magnetfeldes maximal. Wird die Hülse entlang des Schaftes verschoben, so verringert sich die Abschwächung des Magnetfelds zwischen den Kupplungsteilen 7,11 und der Hülse 13 und das übertragbare Drehmoment zwischen den Kupplungsteilen 7 und 11 steigt an.

In Fig. 1b ist der Halstrieb 1 aus Fig. 1a dargestellt, wobei die Hülse 13 mit einem Schalter 14 zusammen wirkt.

Dies kann auf elektrische oder mechanische Weise erfolgen, beispielsweise durch Näherungsschalter ein Gestänge 15.

In Fig. 2 ist ein weiterer Halstrieb 21 mit magnetischer Kupplung dargestellt, wobei eines der beiden Kupplungsteile 22, 23, nämlich das Kupplungsteil 22, über eine Verstellvorrichtung 24 gegen die Kraft einer Feder 25 so verschoben werden kann, dass der Abstand zwischen den Kupplungsteilen 22, 23 und damit der Luftspalt größer wird. Eine Vergrößerung des Luftspaltes hat zur Folge, dass das über die magnetische Kupplung übertragbare Drehmoment absinkt.

Sowohl der Halstrieb 1 aus Fig. 1a also auch der Halstrieb 21 aus Fig. 2 können in einem Winkel zu einem in Fig. 3 dargestellten Antriebsteil 31 mit einer Anschlußstelle an einem nicht dargestellten Antriebsmotor stehen, so dass ein zahnärztliches Winkelstück geschaffen werden kann. Dabei kann auch das Antriebsteil 31 eine Magnetkupplung mit den Kupplungsteilen 32, 33 aufweisen, die beispielsweise durch eine entsprechende Übertragung der aus Fig. 1 bekannten Hülse 13 in der Übertragung von Drehmoment beeinflußt werden kann. Darüber hinaus ist zu erkennen, dass im Antriebsteil 31 ein Untersetzungsgetriebe 34 vorgesehen ist, welches die von einem Antriebsmotor erzeugten hohen Drehzahlen herab setzt. Da hierbei durch die Untersetzung das abtriebsseitige Drehmoment entsprechend steigt, kann eine Drehmomentbegrenzung durch die magnetische Kupplung mit den Kupplungsteilen 32, 33 erfolgen.

Grundsätzlich gilt, dass das über die Kupplung übertragbare Drehmoment stark von der Wahl des Magnetwerkstoffes abhängt, da unterschiedliche Materialien von Permanetmagneten eine unterschiedliche Magnetkraft aufweisen. In der Regel ist es nicht erforderlich, Materialien mit hoher Magnetkraft zu verwenden, da die zulässigen Drehmomente des Bearbeitungswerkzeuges, die ein Bruch desselben sicher vermeiden, vergleichsweise gering sind.

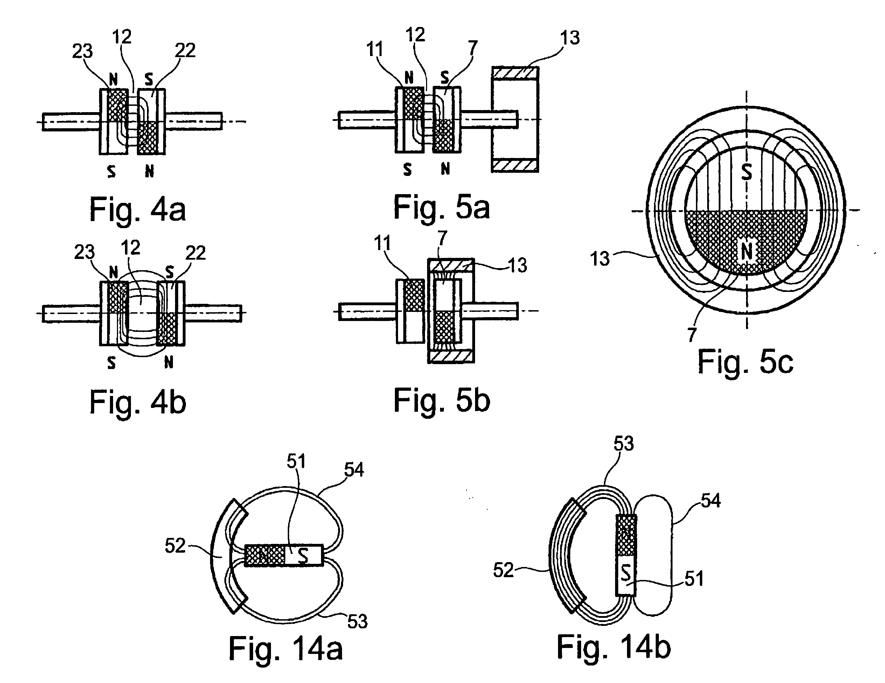

In Fig. 4a und 4b ist das Wirkprinzip einer in Fig. 2 dargestellten magnetischen Kupplung skizziert, wobei die Buchstaben "N" und "S" als Abkürzung für den Nordpol und den Südpol eines Magneten stehen und wobei eine Veränderung des Luftspaltes 12 zwischen dem magnetischen Kupplungsteil 22, 23 das übertragbare Drehmoment verändert. So ist in der Stellung gemäß Fig. 4a ein größeres Drehmoment über die magnetische Kupplung übertragbar als bei der in Fig. 4b gezeigte Stellung der Kupplungsteile 22, 23, die einen größeren Luftspalt 12 aufweisen.

In den Fig. 5a bis 5c ist die Wirkungsweise der in Fig. 1 dargestellten Kupplungsanordnung erläutert. In Fig. 5a ist die magnetische Kupplung mit den Kupplungsteilen 7, 11 gezeigt. Die Kupplungsteile 7, 11 sind zueinander beabstandet und schließen einen Luftspalt 12 ein. Der magnetische Kraftfluß ist durch die eingezeichneten Linien dargestellt. Die Hülse 13 ist soweit zu dem Kupplungsteil beabstandet, dass im wesentlichen keine Auswirkung auf die Kupplungsteile 7, 11 ausübt.

Die Hülse 13 ist aus einem magnetisch gut leitenden Material.

In Fig. 5b ist die Hülse 13 über das Kupplungsteil 7 geschoben, so dass der Magnetfluss vom Kupplungsteil 7 zum Teil durch die Hülse 13 geht, wodurch das auf das Kupplungsteil 11 übertragbare Drehmoment abgeschwächt wird.

Um einen magnetischen Rückschluß zu vermeiden sind die Kupplungsteile 7, 11 aus Fig. 4 und 22,23 aus Fig. 5 aus einem nicht oder nur schwierig magnetisierbarem Material als Trägerteil für Permanentmagnet gebildet.

In Fig. 5c ist eine Ansicht auf das Kupplungsteil 7 und die Hülse 13 sowie ein hypothetischer Kraftlinienverlauf gezeigt, anhand dessen die Wirkungsweise der Hülse 13 verständlich wird.

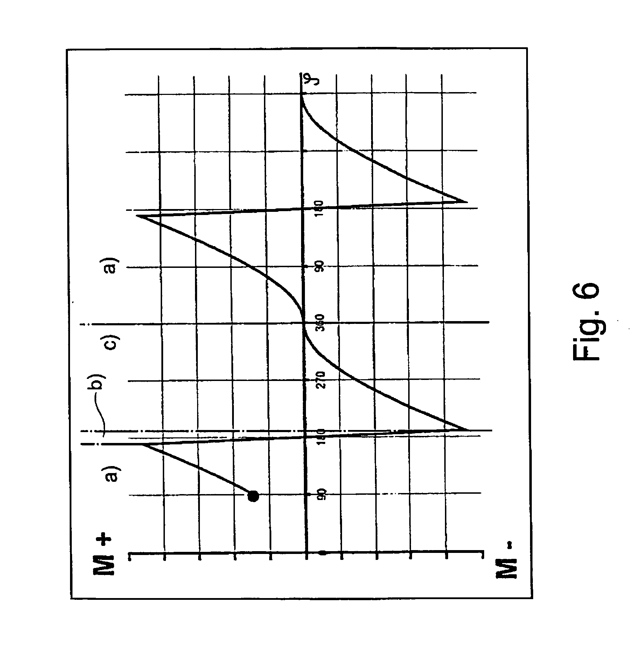

In Fig. 6 ist ein Momentenverlauf in Abhängigkeit des relativen Verdrehwinkels zwischen den magnetischen Kupplungsteilen gezeigt. Das Moment M ist über dem Verdrehwinkel Φ dargestellt. Das Diagramm beginnt bei einer Winkelstellung zwischen den beiden Kupplungsteilen in einem theoretischen Arbeitspunkt von 90° (Bereich a), der sich bei einem normalen Betrieb mit belastetem Abtrieb einstellen kann. Das Antriebsmoment und das Abtriebsmoment liegen unterhalb des eingestellten Maximums. In dem Bereich zwischen 0 und < 180° steigt das zur Rotation des Bearbeitungswerkzeugs notwendige Abtriebsmoment mit dem Antriebsmoment an, dargestellt durch den Kurvenverlauf ab einem Winkel von 90°. Kurz vor Erreichen eines Verdrehwinkels von 180° ist das maximal übertragbare Abtriebsmoment erreicht, wobei bei dem maximal übertragbaren Moment der magnetische Kupplungsteil des Abtriebs still steht. Aufgrund der Polarisierung der magnetischen Kupplungselemente des Antriebs und des Abtriebs (Bereich b) stellt sich bei weiterem Verdrehen des Antriebs ein negatives Abtriebsmoment ein, wobei eine Drehrichtungsumkehr des Abtriebs erreicht wird. In dieser Lage drehen An- und Abtrieb gegensinnig. Mit weiter zunehmenden Verdrehwinkel des Antriebs gegenüber dem Abtrieb nimmt das negative Abtriebsmoment wieder ab (Bereich c) und bei einem Verdrehwinkel von 360° stehen sich die Magnete gegenpolig gegenüber. In dieser Stellung kann kein Drehmoment übertragen werden.

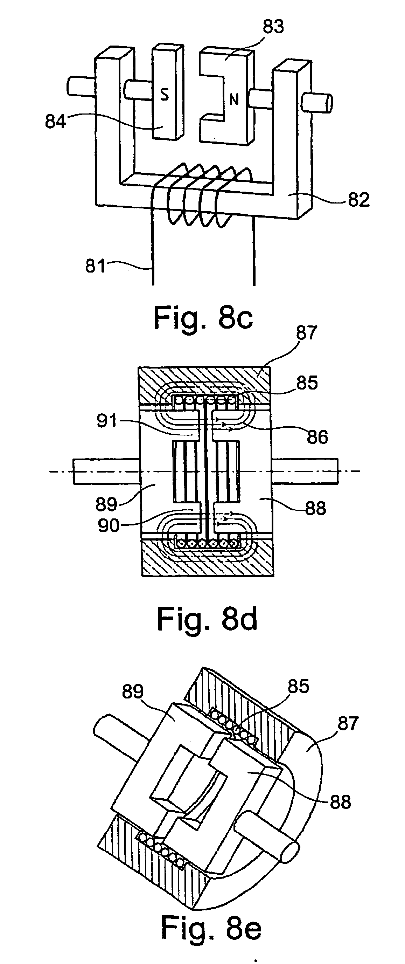

Der Kurvenverlauf des Abtriebmoments ist qualitativ dargestellt und stark abhängig von der geometrischen Dimensionierung der Bauteile. Die Periode des Kurvenverlaufs ist abhängig von der Anzahl der Magnete und/oder Gestaltung der klauenförmigen Kupplungsteile, siehe auch Fig. 8c-e.

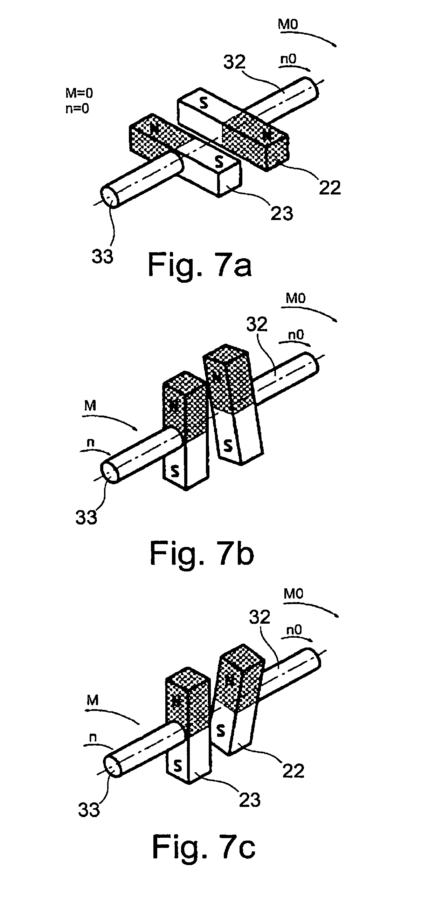

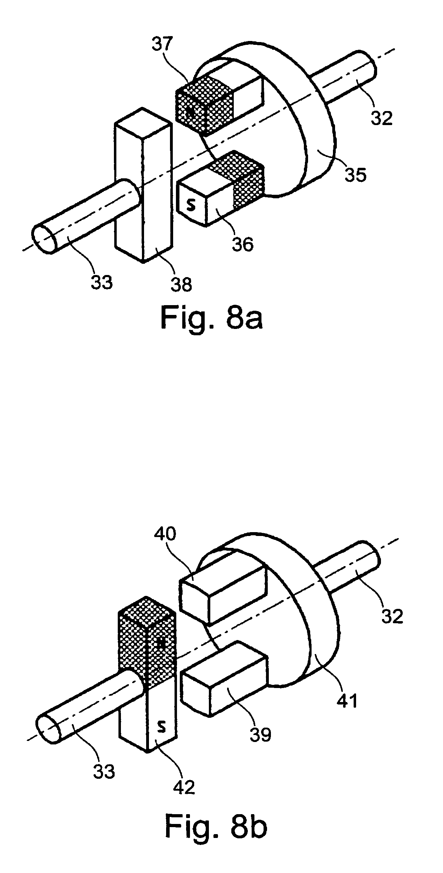

In den Fig. 7a bis 7c sind magnetische Kupplungselemente mit in radialer Richtung magnetisierten Magneten dargestellt, wobei jedoch darauf hingewiesen wird, dass die magnetische Kupplung auch mit einem Magnet und einem drehendem Joch auf An- oder Abtriebseite funktioniert, vergleiche Fig. 8a. In Fig. 7a stehen sich die magnetischen Kupplungselemente 22, 23 gegenpolig gegenüber. In dieser Stellung kann kein Drehmoment an den Abtrieb 33 übertragen werden. Der Antrieb 32 wird mit der Drehzahl n und einem Drehmoment M0 beaufschlagt, so dass die in Fig. 7a dargestellte Lage nur eine Momentaufnahme ist. Die Drehrichtung und die Richtung des Antriebmoments M0 wird durch die Pfeile angedeutet.

Durch das Verdrehen des Antriebs 32 kann mit zunehmendem Verdrehwinkel ein immer größeres Abtriebsdrehmoment an den Abtrieb 33 übertragen werden, wobei das Antriebsmoment M0 und die Antriebsdrehzahl n0 in die gleiche Richtung wie das Abtriebsmoment M und die Abtriebsdrehzahl n gehen. Das Abtriebsmoment M bewegt sich entlang der in Fig. 6 Bereich a) dargestellten Kurve und steigt bis zu einem Maximalwert an. Dieser Maximalwert liegt im Ausführungsbeispiel im Bereich von 180°, genauer bei etwas weniger als 180°. Wird dieser Maximalwert erreicht, kippt die Momentenkurve und schlägt um, wie im Bereich b) aus Fig. 6 dargestellt. Damit wird eine Lage gemäß Fig. 7c erreicht, bei der der Antrieb nach wie vor das Drehmoment M0 und die Drehzahl n0 aufweisen, die beispielsweise konstant sein können. Aufgrund des Vorbeidrehens des magnetischen Kupplungsteils 22 an dem magnetischen Kupplungsteil 23 des Abtriebs 33 entsteht jedoch am Abtrieb 33 ein negatives Drehmoment M und eine entgegengerichtete Drehrichtung n. In dieser Stellung drehen sich der An- und Abtrieb gegensinnig, wie im Bereich c) aus Fig. 6 dargestellt. Diese Wirkungsweise kann dazu verwendet werden, das abtriebseitig angeordnete Werkzeug zurückzudrehen oder zu lockern, wenn es festgefressen ist. Durch die Wahl von Magneten wird demnach nach dem Auskuppeln ein entgegen der ursprünglichen Arbeitsrichtung gerichtetes Drehmoment erzeugt. Dabei kann ein nach der Magnetkupplung angeordnetes Getriebe die Wirkung unterstützen.

Aus Fig. 8a und 8b wird ersichtlich, dass es ausreicht, wenn eines der Kupplungselemente magnetisch ist. So ist in Fig. 8a am Antrieb 32 eine Scheibe 35 vorgesehen, an welcher wiederum zwei Stabmagnete 36, 37 angeordnet sind, die gegensinnig ausgerichtet sind, so dass der Südpol des Magnets 36 und der Nordpol des Magnets 37 in die selbe Richtung zeigen. Auf der Abtriebsseite 33 ist ein Joch 38 angeordnet, welches weichmagnetisch ist und welches unter dem Einfluß der Magnete 36, 37 bewegt wird.

In Fig. 8b ist die Funktion umgekehrt; hier trägt der Antrieb 32 ein zwei Schenkel 39, 40 aufweisendes Joch 41 und der Abtrieb 33 ist mit einem Stabmagneten 42 ausgestattet. Wird das Joch 41 mit seinen Schenkel 39, 40 an dem Magnet 42 vorbeigedreht, so kann ein Drehmoment übertragen werden.

In Fig. 8c wird durch eine stromdurchflossene Spule 81 ein Magnetfeld im Stator 82 erzeugt. Das Magnetfeld schließt sich zwischen den Teilen 83 und 84, welche drehbar im Stator 82 gelagert sind. Durch geeignete geometrische Gestaltung kann zwischen den Teilen 83 und 84 ein Drehmoment in Abhängigkeit der elektrischen Versorgung der Spule 81 übertragen werden. Die Beeinflussung des übertragbaren Kupplungsmoments erfolgt durch eine Veränderung der Magnetstärke eines Elektromagneten. Hierbei wird direkt ein statischer Magnet beeinflußt. Die rotierenden, drehmomentübertragenden Teile dienen zur Leitung und Führung des Feldes.

In Fig. 8d und 8e ist ein anderer stationärer Magnet gezeigt, der als Elektromagnet ausgebildet ist. Das durch eine Spule 85 erzeugte Magnetfeld 86 wird über einen Rückschluß 87 und die Drehmoment-Kupplung 88,89 geschlossen. Durch den klauenförmigen Aufbau der Kupplungsteile 88,89 wird die Drehmomentübertragung erreicht. Der in seiner Feldstärke regelbare Elektromagnet ermöglicht die Einstellung des Grenzmomentes. Durch die Anzahl der sich gegenüberstehenden Erhebungen bzw. Pole 90, 91 die den Rückschluß bilden, ist die Charakteristik der Kupplung beeinflußbar. So bündeln außenliegende Erhebungen 90, 91 die Feldlinien in einem großen Abstand zur Drehachse, so dass das übertragbare Drehmoment vergleichsweise groß ist. Durch die Anzahl der Erhebungen wird der Verdrehwinkel zwischen Antriebs- und Abtriebswelle bis zum nächsten Rasten festgelegt.

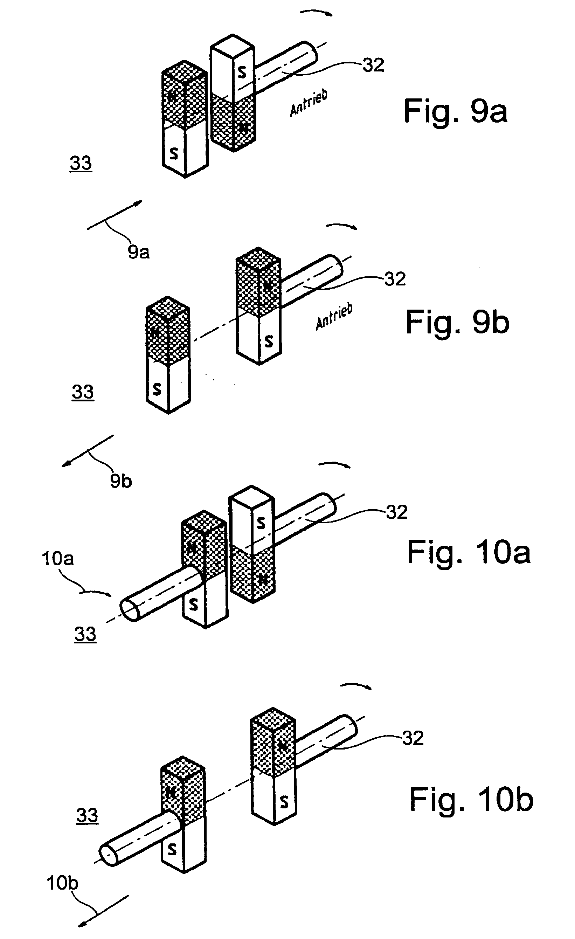

In den Fig. 9a, 9b ist dargestellt, wie beim Verdrehen des Antriebs auch anstatt einer Drehbewegung des Abtriebs eine Translationsbewegung hervorgerufen werden kann. In Fig. 9a ziehen sich die gegenseitig polarisierten Magnete des Antriebs 32 bzw. Abtriebs an, dargestellt durch den Pfeil 9a. In Fig. 9b ist die entgegengesetzte Lage des Antriebs 32 dargestellt, in welcher eine maximale Absto-βung der Abtriebsseite, dargestellt durch den Pfeil 9b vorliegt. Die Drehbewegung des Antriebs 32 wird in eine Hin- und Herbewegung des Abtriebs 33 umgesetzt.

In Fig. 10a und 10b ist eine weitere Ausführung der magnetischen Kupplung dargestellt, bei welcher die Abtriebsseite neben der Drehung zusammen mit dem Antrieb 32 auch eine Translationsbewegung fährt, wenn die Drehbewegung blockiert ist. In Fig. 10a ist dazu am Abtrieb ein Drehmoment durch den Pfeil 10a eingetragen, welches mit dem Drehmoment des Antriebs 32 in dieselbe Richtung läuft. Im Fall des Blockierens des Abtriebs wird gemäß Fig. 10b auf der Abtriebsseite eine Translationsbewegung des Abtriebs 33 bewirkt, dargestellt durch den Pfeil 10b. Die Wirkungsweise entspricht in diesem Fall dem in den Fig. 9a und 9b dargestellten Ablauf.

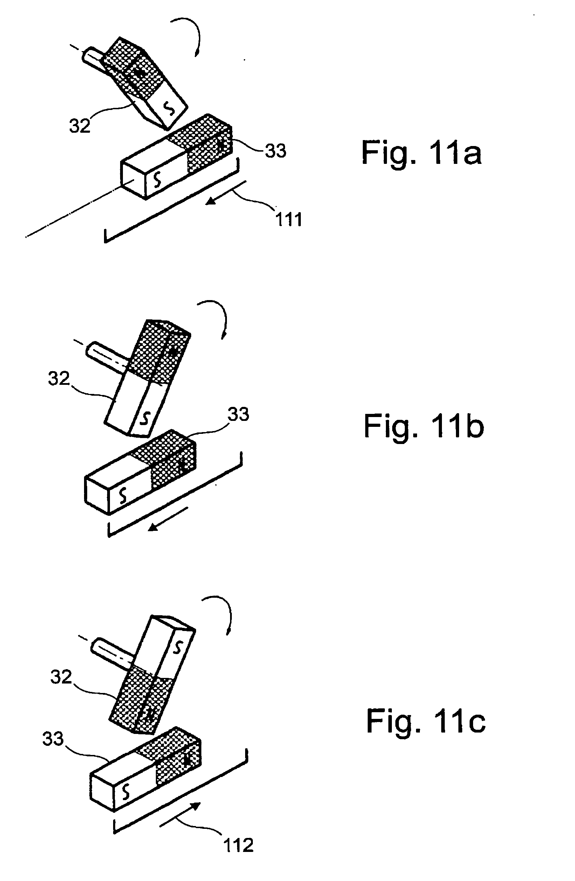

In den Fig. 11a bis 11c ist eine andere Art der Umsetzung einer Drehbewegung in eine Translationsbewegung gezeigt. In Fig. 11a ist hierzu ein Antrieb 32 mit einem radial magnetisierten Magneten und ein Abtrieb 33 mit einem Stabmagneten dargestellt, wobei der Abtrieb 33 in geeigneter Weise mit dem Werkzeug verbunden ist. Beim Vorbeiführen des Südpols des Antriebs 32 an dem Nordpol des Abtriebs 33 entsteht eine magnetische Kraft, die den Abtrieb 33 in Richtung des Pfeils 111 zieht, wodurch die in Fig. 11b dargestellte Lage eingenommen wird. Ein weiteres Verdrehen des Antriebs 32 hat zur Folge, dass aufgrund der Anziehung des Nordpols des Antriebs mit dem Südpol des Abtriebs der Abtrieb in Richtung des Pfeils 112 in Fig. 11c bewegt wird. Damit fährt der Abrieb 33 in die in Fig. 11a dargestellte Ausgangslage zurück.

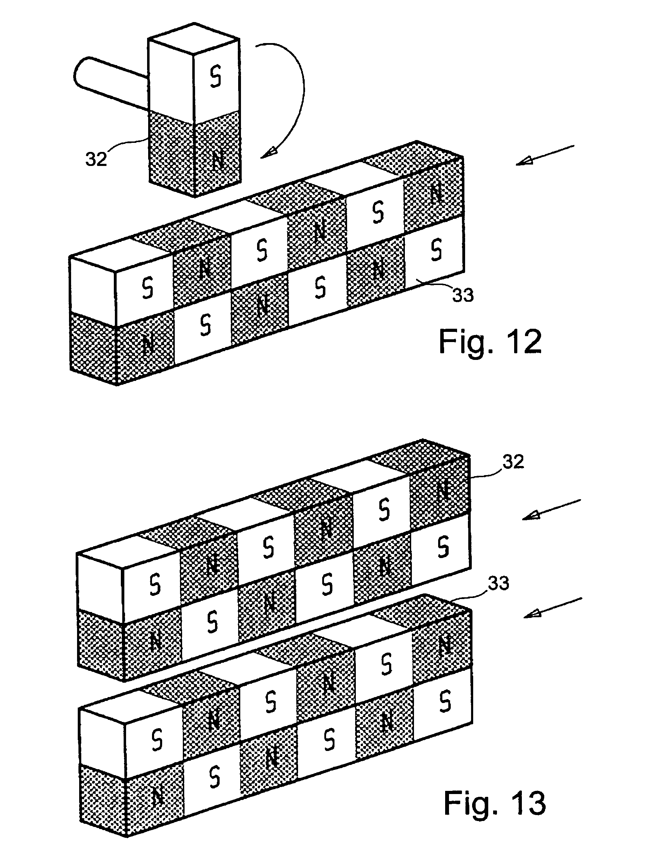

Bei entsprechender Wahl des Abtriebs kann bei einem rotierenden Antrieb eine Translationsbewegung hervorgerufen werden, welches ein mehrfaches der Abmessungen des Antriebs entspricht. Der Abtrieb weist gemäß Fig. 12 dazu einen Magneten mit mehreren Paaren linear angeordneter Stabmagneten auf, die alle in der selben Weise ausgerichtet sind. Die fortwährende Drehung des Antriebs 32 führt in diesem Fall zu einer fortwährenden Verschiebung des Abtriebs 33.

Das grundsätzliche Prinzip der Abschwächung des Magnetfeldes zur Verringerung des übertragbaren Moments ist aber auch zur Übertragung einer reinen Translationsbewegung anwendbar, wie in Fig. 13 dargestellt.

Einem beispielsweise in Translationsrichtung oszillierenden, antriebsseitigen Kupplungselement 32 ist ein abtriebseitiges Kupplungselement 33 zugeordnet, welches ebenfalls in Translationsrichtung verschiebbar ist. Wird der Antrieb 32 hin und her bewegt, so folgt der Abtrieb 33 der Bewegung, bis die Grenze der übertragbaren Kraft erreicht wird. In diesem Fall blockiert beispielsweise der Abtrieb und der Antrieb wird weiter hin und her bewegt, wodurch eine Überlastung des Werkzeuges am Abtrieb verhindert wird. Die zwischen den Kupplungselementen 32, 33 übertragbare Kraft wird durch nicht dargestellte Bauteile oder auf andere Weise im Rahmen dieser Erfindung verändert.

In Fig. 14a ist eine Prinzipskizze einer Momentbegrenzung in einem gezielten Winkelbereich dargestellt. Ausgehend von dem magnetischen Kupplungselement 51 und einem sich nur über einen Teil des Umfangs erstreckenden weichmagnetischen Bauteil 52 ist ein Verlauf der Kraftlinien 53, 54 qualitativ dargestellt. In der hier gezeigten Position fließt ein Teil der Feldlinien 53,54 durch das Bauteil 52, wobei das Bauteil 52 dem magnetischen Pol des Kupplungselements 51 gegenüberliegend angeordnet ist.

In Fig. 14b ist das Kupplungselement 51 um 90° gegenüber Fig. 14a gedreht, so dass die Feldlinien 53 nun zwischen den Polen durch das Bauteil 52 fließen. Hierdurch wird das Magnetfeld stärker abgeschwächt als gegenüber der Lage in Fig. 14a. Bei einer Umdrehung des magnetischen Kupplungselements 51 variiert folglich die Abschwächung des übertragbaren Moments zu dem nicht dargestellten Abtriebselement in Abhängigkeit von der Winkellage.

### Bezugszeichenliste

- 1: Halstrieb
- 2: Schaft
- 3: Antriebswelle
- 4: Ende Antriebswelle
- 5: Zahnrad
- 6: Ende Antriebswelle
- 7: magnetisches Kupplungsteil, Kupplungselement
- 8: Schaft
- 9: Welle
- 10: Wellenstück
- 11: magnetisches Kupplungsteil, Kupplungselement
- 12: Luftspalt
- 13: Hülse, Bauteil
- 14: Schalter
- 15: Gestänge
- 21: Halsantrieb
- 22: Kupplungsteil, Kupplungselement
- 23: Kupplungsteil, Kupplungselement
- 24: Verstellvorrichtung
- 25: Feder
- 31: Antriebsteil
- 32: Kupplungsteil bzw. -element am Antrieb
- 33: Kupplungsteil bzw. -element am Abtrieb
- 34: Untersetzungsgetriebe
- 35: Scheibe
- 36: Magnet
- 37: Magnet
- 38: Joch
- 39: Schenkel
- 40: Schenkel
- 41: Joch
- 42: Stabmagnet
- 51: magnetisches Kupplungselement
- 52: Bauteil
- 53: Feldlinie
- 54: Feldlinie
- 81: Spule
- 82: Stator
- 83: weichmagnetisierbares Teil
- 84: weichmagnetisierbares Teil
- 85: Spule
- 86: Magnetfeld
- 87: Rückschluß
- 88: Kupplungsteil
- 89: Kupplungsteil
- 90: Erhebung (Pol)
- 91: Erhebung (Pol)

## Patentansprüche

1. Zahnärztliches Instrument mit einem angetriebenen Werkzeug, wobei eine Übertragungseinrichtung mit mindestens einem magnetischen und/oder magnetisierbaren Kupplungselement (7,11; 83,84; 88,89) vorgesehen ist, **dadurch gekennzeichnet, dass** Mittel (12,13; 81; 85) zur Beeinflussung des Übertragungsmomentes des magnetischen und/oder magnetisierbaren Kupplungselements (7,11; 83,84; 88,89) vorgesehen sind, die eine Veränderung des Rückschlusses des magnetischen Kupplungselements (7, 11; 83, 84; 88, 89)durch Abschwächung des Magnetfeldes zwischen den Kupplungselementen (7, 11; 83, 84; 88, 89) bewirken.

2. Zahnärztliches Instrument nach Anspruch 1, **dadurch gekennzeichnet, dass** das Mittel ein Bauteil (13) mit weichmagnetischen Eigenschaften ist und dass dieses Bauteil im Einflussbereich einer oder mehrerer Kupplungselemente (7, 11) positionierbar ist.

3. Zahnärztliches Instrument nach Anspruch 1 oder 2, **dadurch gekennzeichnet, dass** das Mittel zur Veränderung des Rückschlusses einen Elektromagneten (81,82; 86, 87) aufweist.

4. Zahnärztliches Instrument nach Anspruch 3, **dadurch gekennzeichnet, dass** die Magnetkraft des Elektromagnets (81,82; 86,87) in Abhängigkeit von Betriebsparametern gesteuert ist.

5. Zahnärztliches Instrument nach Anspruch 3 oder 4, **dadurch gekennzeichnet, dass** die Veränderung des Rückschlusses indirekt mit stationären Magneten (81,82; 86,87) erfolgt.

6. Zahnärztliches Instrument nach Anspruch 3 oder 4, **dadurch gekennzeichnet, dass** die Veränderung des Rückschlusses direkt durch bewegte Magnete erfolgt, welche auch das Drehmoment bzw. die Magnetkraft weitergeben.

7. Zahnärztliches Instrument nach einem der Ansprüche 2 bis 6, **dadurch gekennzeichnet, dass** das weichmagnetische Bauteil (52) nur in einem Teilbereich des magnetischen Kupplungselements (51), insbesondere nur in einem Teilsegment bezüglich des Umfangs wirksam ist.

8. Zahnärztliches Instrument nach einem der Ansprüche 2 bis 7, **dadurch gekennzeichnet, dass** Schaltmittel (14, 15) vorgesehen sind, die mit dem magnetischen Kupplungselement (7, 11) und dem weichmagnetischen Bauteil (13) zusammenwirken.

9. Zahnärztliches Instrument nach einem der Ansprüche 1 bis 8, **dadurch gekennzeichnet, dass** die magnetischen Kupplungselemente so ausgewählt sind, dass nach dem Auskuppeln der magnetischen Kupplungselemente eine entgegen der ursprünglichen Arbeitsrichtung gerichtete Kraft erzeugt wird, mittels welcher das Werkzeug in entgegengesetzter Richtung bewegbar ist.

10. Zahnärztliches Instrument nach einem der Ansprüche 1 bis 9, **dadurch gekennzeichnet, dass** zusätzlich zu einem Halstrieb (1) ein Antriebsmotor mit hoher Drehzahl und ein Untersetzungsgetriebe (34) zur Verringerung der Drehzahlen in einem Bereich von 5 bis 25 Umdrehungen/Sekunde ( 300 bis 2.100 U/min) vorgesehen ist.

11. Zahnärztliches Instrument nach einem der Ansprüche 1 bis 10, **dadurch gekennzeichnet, dass** das Werkzeug bezüglich Torsion bis zu einem Grenzwert beanspruchbar ist und dass die Übertragungseinrichtung mit dem magnetischen Kupplungselement derart ausgebildet ist, dass der Grenzwert des Werkzeugs stets unterschritten wird.

12. Zahnärztliches Instrument nach einem der Ansprüche 1 bis 11, **dadurch gekennzeichnet, dass** das zahnärztliches Instrument ein Werkzeug zur Wurzkanalbehandlung umfasst.

13. Zahnärztliches Instrument nach einem der Ansprüche 1 bis 12, **dadurch gekennzeichnet, dass** das magnetische Kupplungselement (7, 11; 22, 23) so angeordnet sind, dass sowohl antriebsseitig als auch abtriebsseitig Drehbewegungen übertragen werden.

14. Zahnärztliches Instrument nach einem der Ansprüche 1 bis 12, **dadurch gekennzeichnet, dass** die magnetischen Kupplungselemente (32, 33) so angeordnet sind, dass ein Teil der Kupplung (32) eine Drehbewegung und der andere Teil der Kupplung eine Translationsbewegung (33) ausführt.

15. Zahnärztliches Instrument nach einem der Ansprüche 1 bis 12, **dadurch gekennzeichnet, dass** beide magnetische Kupplungselemente (32, 33) Translationsbewegungen ausführen.

16. Zahnärztliches Instrument nach einem der Ansprüche 1 bis 15, **dadurch gekennzeichnet, dass** eine Anschlussstelle (16) an einen Motor vorgesehen ist, welche der Anschlussstelle eines mit hoher Drehzahl betriebenen Werkzeugs entspricht.

## Claims

1. A dental instrument comprising a driven tool, wherein a transmission system having at least one magnetic and/or magnetizable clutch element (7, 11; 83, 84; 88, 89) is provided, **characterized in that** means (12, 13; 81; 85) for modifying the torque to be transmitted by said magnetic and/or magnetizable clutch element (7, 11; 83, 84; 88, 89) are provided which cause an modification of magnetic flux of said magnetic clutch element (7, 11; 83, 84; 88, 89) by causing attenuation of the magnetic field between said clutch elements (7, 11; 83, 84; 88, 89).

2. The dental instrument according to claim 1,
**characterized in that** said means is a component having soft magnetic properties and that this component is positioned in the region of action of one or more clutch elements (7, 11).

3. The dental instrument according to claim 1 or claim 2,
**characterized in that** said means for modifying the magnetic flux exhibits electromagnets (81, 82; 86, 87).

4. The dental instrument according to claim 3,
**characterized in that** the magnetic force of said electromagnet (81. 82; 86. 87) is controlled in accordance with the effective transmission parameters.

5. The dental instrument according to claim 3 or claim 4,
**characterized in that** modification of the magnetic flux is indirectly effected using stationary magnets (81, 82; 86, 87).

6. The dental instrument according to claim 3 or claim 4,
**characterized in that** modification of the magnetic flux is effected directly by moving magnets, which also transmit the torque or magnetic force.

7. The dental instrument according to any one of claims 2 to 6, **characterized in that** said soft-magnetic component (52) is effective in only a subregion of the magnetic clutch element (51), particularly only in a subsegment relative to the circumference.

8. The dental instrument according to any one of claims 2 to 7, **characterized in that** switching means (14, 15) are provided which cooperate with said magnetic clutch element (7, 11) and said soft-magnetic component (13).

9. The dental instrument according to any one of claims 1 to 8, **characterized in that** said magnetic clutch elements are selected such that after disengagement of said magnetic clutch elements a force is caused which acts contrary to the original operational direction, by means of which said tool can be moved in the reverse direction.

10. The dental instrument according to any one of claims 1 to 9, **characterized in that** in addition to a neck drive (1), a drive motor having a high rotational speed and a reduction transmission (34) for reducing the rotational speed to a range of from 5 to 25 rps (300 to 2,100 rpm) are provided.

11. The dental instrument according to any one of claims 1 to 10, **characterized in that** said tool can be subjected to a torsional force up to a limiting value and that said transmission system including said magnetic clutch system is configured such that said limiting value of the tool is never reached.

12. The dental instrument according to any one of claims 1 to 11, **characterized in that** said dental instrument comprises a tool designed for root canal treatment.

13. The dental instrument according to any one of claims 1 to 12, **characterized in that** said magnetic clutch system (7, 11; 22, 23) is configured such that rotational motion is transmitted on both driving and driven sides.

14. The dental instrument according to any one of claims 1 to 12, **characterized in that** said magnetic clutch elements (32, 33) are configured such that one part of the clutch (32) performs rotational motion while the other part of the clutch (33) performs translational motion.

15. The dental instrument according to any one of claims 1 to 12, **characterized in that** both magnetic clutch elements (32, 33) perform translational motion.

16. The dental instrument according to any one of claims 1 to 15, **characterized in that** a docking point (16) is provided for a motor, which docking point corresponds to a docking point for a high-speed tool.

## Revendications

1. - Instrument dentaire comprenant un outil entraîné, dans lequel est prévu un dispositif de transmission possédant au moins un élément d'accouplement magnétique et/ou magnétisable (7, 11 ; 83, 84 ; 88, 89) **caractérisé en ce qu'**il est prévu des moyens (12, 13 ; 81, 85) pour influencer le couple de transmission de l'élément d'accouplement magnétique et/ou de l'élément d'accouplement magnétisable (7, 11 ; 83, 84 ; 88, 89), qui détermine une modification du couplage de l'élément d'accouplement magnétique (7, 11 ; 83, 84 ; 88, 89) par un affaiblissement du champ magnétique entre les éléments d'accouplement (7, 11 ; 83, 84 ; 88, 89).

2. - Instrument dentaire selon la revendication 1, **caractérisé en ce que** le moyen est un composant (13) possédant des propriétés de magnétisme doux et **en ce que** ce composant peut être positionné dans la zone d'influence d'un ou de plusieurs éléments d'accouplement (7, 11).

3. - Instrument dentaire selon la revendication 1 ou 2, **caractérisé en ce que** le moyen pour la modification du couplage présente un électro-aimant (81, 82 ; 86, 87).

4. - Instrument dentaire selon la revendication 3, **caractérisé en ce que** la force magnétique de l'électro-aimant (81, 82 ; 86, 87) est commandée en fonction de paramètres de travail.

5. - Instrument dentaire selon la revendication 3 ou 4, **caractérisé en ce que** la modification du couplage s'effectue indirectement à l'aide d'aimants fixes (81, 82 ; 86, 87).

6. - Instrument dentaire selon la revendication 3 ou 4 , **caractérisé en ce que** la modification du couplage est assurée directement par des aimants mis en mouvement qui transmettent aussi le couple ou la force magnétique.

7. - Instrument dentaire selon une des revendications 2 à 6, **caractérisé en ce que** le composant à magnétisme doux (52) n'est actif que dans une région partielle de l'élément d'accouplement magnétique (51), en particulier seulement dans un segment partiel, considéré sur la circonférence.

8. - Instrument dentaire selon une des revendications 2 à 7, **caractérisé en ce qu'**il est prévu des moyens de commutation (14, 15) qui coopèrent avec l'élément d'accouplement magnétique (7, 11) et avec le composant à magnétisme doux (13).

9. - Instrument dentaire selon une des revendications 1 à 8, **caractérisé en ce que** les éléments d'accouplement magnétique sont choisis de manière qu'après le désaccouplement des éléments d'accouplement magnétique, il s'engendre une force dirigée dans le sens opposé au sens de travail initial, au moyen de laquelle l'outil peut être mis en mouvement dans le sens opposé.

10. - Instrument dentaire selon une des revendications 1 à 9, **caractérisé en ce qu'**en supplément d'un manche (1), sont prévus un moteur d'entraînement à grande vitesse de rotation et un mécanisme réducteur (34) destiné à réduire les nombres de tours dans une plage de 2 à 25 tours/seconde (300 à 2100 tr/min).

11. - Instrument dentaire selon une des revendications 1 à 10, **caractérisé en ce que** l'outil peut être sollicité à la torsion jusqu'à une certaine valeur limite et **en ce que** le dispositif de transmission comprenant l'élément d'accouplement magnétique est configuré de sorte qu'on reste toujours au-dessous de la valeur limite de l'outil.

12. - Instrument dentaire selon une des revendications 1 à 11, **caractérisé en ce que** l'instrument dentaire comprend un outil pour le traitement des canaux radiculaires.

13. - Instrument dentaire selon une des revendications 1 à 12, **caractérisé en ce que** l'élément d'accouplement magnétique (7, 11 ; 22, 23) est disposé de manière que des mouvements de rotation puissent être transmis aussi bien sur le côté entrée que sur le côté sortie.

14. - Instrument dentaire selon une des revendications 1 à 13, **caractérisé en ce que** les éléments d'accouplement magnétiques (32, 33) sont disposés de manière qu'une partie de l'accouplement (32) décrive un mouvement de rotation et que l'autre partie de l'accouplement décrive un mouvement de translation (33).

15. - Instrument dentaire selon une des revendications 1 à 12, **caractérisé en ce que** les deux éléments d'accouplement magnétiques (32, 33) décrivent des mouvements de translation.

16. - Instrument dentaire selon une des revendications 1 à 15, **caractérisé en ce qu'**une zone de raccordement (16) est prévue sur un moteur, laquelle zone d'accouplement correspond à un outil entraîné à une grande vitesse de rotation.
